# EUROPÄISCHE PATENTANMELDUNG

(11) **EP 2 407 840 A1**
(43) Veröffentlichungstag der Anmeldung: **18.01.2012**
(21) Anmeldenummer: 10169885.0
(22) Anmeldetag: 16.07.2010
(51) Int. Cl.: G05B 19/042, G05B 19/05, G05B 19/418, H04L 12/46

(54) **Verfahren zum Betreiben einer Automatisierungseinrichtung**

(71) Anmelder: SIEMENS AKTIENGESELLSCHAFT, 80333 München (DE)
(72) Erfinder: Graf, Markus, 76761 Rülzheim (DE); Zwosta, Hanns, 91080 Uttenreuth (DE)

(57) **Zusammenfassung**

Die Erfindung betrifft ein Verfahren zum Betreiben einer Automatisierungseinrichtung, welche mindestens eine Master-Einheit und mindestens eine über einen ersten Bus (10) verbundene Slave-Einheit (5) - DP/FF-Link - umfasst, wobei während der Steuerung eines technischen Prozesses über den ersten Bus (10) Telegramme übermittelt werden, welche einen Prozessabbild-Datenbereich für projektierte, an die Slave-Einheit über einen zweiten Bus (11) - FF-Bus - angeschlossene Feldgeräte und einen projektierten reservierten Prozessabbild-Datenbereich umfassen, welcher für eventuelle Erweiterungen der Automatisierungseinrichtung mit weiteren an diese Slave-Einheit anschließbaren Feldgeräten vorgesehen ist. Es werden Maßnahmen vorgeschlagen, mittels deren die Automatisierungseinrichtung mit Feldgeräten, insbesondere Feldgeräten, welche der Fieldbus Foundation Spezifikation genügen, während des Steuerbetriebs (RUN-Betriebs) erweitert werden kann.

## Beschreibung

Die Erfindung betrifft ein Verfahren zum Betreiben einer Automatisierungseinrichtung, welche mindestens eine Master-Einheit und mindestens eine über einen ersten Bus verbundene Slave-Einheit umfasst, wobei während der Steuerung eines technischen Prozesses über den ersten Bus Telegramme übermittelt werden, welche jeweils einen Prozessabbild-Datenbereich für projektierte, an die Slave-Einheit über einen zweiten Bus angeschlossene Feldgeräte und einen projektierten reservierten Prozessabbild-Datenbereich umfassen, welcher für eventuelle Erweiterungen der Automatisierungseinrichtung mit mindestens einem weiteren an diese Slave-Einheit anschließbaren Feldgerät vorgesehen ist. Darüber hinaus betrifft die Erfindung eine Automatisierungseinrichtung, welche zur Durchführung des Verfahrens geeignet ist.

Ein derartiges Verfahren sowie eine derartige Automatisierungseinrichtung sind aus der EP 1 495 376 B1 bekannt. Während einer Projektierungsphase projektiert ein Anwender mittels eines Engineering-Systems einen Nutzdatenbereich sowie einen Reserve-Nutzdatenbereich für eine Slave-Einheit, wobei dieser Reserve-Nutzdatenbereich zur Erweiterung einer Slave-Einheit mit mindestens einer Slave-Baugruppe, z. B. einer Slave-Baugruppe in Form einer Analogein/-ausgabe- oder einer Digitalein/-ausgabe-Baugruppe, vorgesehen ist. Auf diese Datenbereiche greift die CPU-Einheit oder die Master-Einheit einer speicherprogrammierbaren Steuerung mittels eines Telegramms lesend oder schreibend zu und für den Fall, dass während des laufenden Steuerbetriebs bzw. während der Steuerung eines technischen Prozesses die Slave-Einheit tatsächlich um eine Slave-Baugruppe erweitert wird, geschieht ein derartiger Zugriff aufgrund des projektierten Reserve-Nutzdatenbereiches stoß- und rückwirkungsfrei für alle an den Bus angeschlossenen Master- und Slave-Einheiten; die CPU-oder die Master-Einheit muss für eine Erweiterung nicht von einem RUN-Betrieb in einen STOP-Zustand gefahren werden. Maßnahmen für eine im Wesentlichen stoß- und rückwirkungsfreie Erweiterung der Automatisierungseinrichtung mit einem Feldgerät, welches beispielsweise der Spezifikation der Fieldbus Foundation genügt, sind nicht vorgesehen.

Feldgeräte, die der Spezifikation der Fieldbus Foundation genügen - im Folgenden als FF-Geräte bezeichnet -, übernehmen Prozessregelfunktionen, wobei im Rahmen einer verteilten Kommunikation jedes FF-Gerät über einen FF-Bus mit einem weiteren FF-Gerät Daten austauscht. Dazu ist eine zentrale Kommunikationssteuerung - ein so genannter einen Scheduler aufweisender "Link Active Scheduler" (LAS) - vorgesehen, welcher den zeitlichen Ablauf der Buskommunikation steuert. Diese Kommunikationssteuerung wickelt im Rahmen einer ungetakteten Datenübertragung zeitunkritische Aufgaben ab, beispielsweise die Übertragung von Geräteparametern in die Feldgeräte. Zeitkritische Aufgaben dagegen, z. B. Aufgaben in Form von Einlesen, Verarbeiten oder Ausgeben von Prozessdaten, werden mittels der Kommunikationssteuerung im Rahmen einer getakteten Datenübertragung entsprechend einer Übertragungsliste verwirklicht, wobei die Übertragungsliste anzeigt, zu welchem Zeitpunkt ein Feldgerät zum Senden seiner Daten aufgefordert wird und zu welchem Zeitpunkt ein Feldgerät diese Daten einlesen kann.

Der vorliegenden Erfindung liegt die Aufgabe zugrunde, ein Verfahren der eingangs genannten Art anzugeben, mittels dessen die Automatisierungseinrichtung mit Feldgeräten, insbesondere Feldgeräten, welche der Fieldbus Foundation Spezifikation genügen, während des Steuerbetriebs (RUN-Betriebs) erweitert werden kann. Darüber hinaus ist eine Automatisierungseinrichtung zu schaffen, welche zur Durchführung des Verfahrens geeignet ist.

Diese Aufgabe wird im Hinblick auf das Verfahren durch die im kennzeichnenden Teil des Anspruchs 1 angegebenen, im Hinblick auf die Automatisierungseinrichtung durch die im kennzeichnenden Teil des Anspruchs 5 angegebenen Maßnahmen gelöst.

Vorteilhafte Ausgestaltungen der Erfindung ergeben sich aus den Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: eine Automatisierungseinrichtung,
- Figur 2: eine Bibliothek von FF-Geräten und
- Figur 3: eine Engineering- und Runtime-Übersicht.

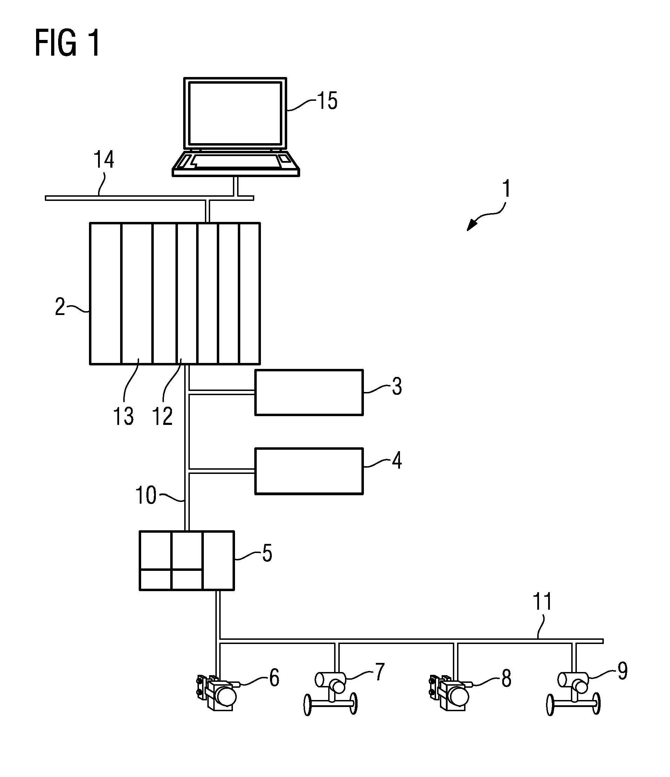

In Figur 1 ist mit 1 eine Automatisierungseinrichtung bezeichnet, welche ein Automatisierungsgerät 2, Slave-Einheiten 3, 4, 5 und mehrere Feldgeräte 6, 7, 8, 9 aufweist. Die Slave-Einheiten 3, 4 sind beispielsweise als so genannte dezentrale Peripheriegeräte ausgebildet, die jeweils mit mehreren digitalen oder analogen Ein-/Ausgabe-Baugruppen zum Anschluss von Magnetventilen, Schützen, Widerstandsthermometern oder sonstigen Aktoren oder Sensoren versehen sind. Die Slave-Einheit 5 ist im vorliegenden Beispiel ein so genannter DP/FF-Link, welcher einen Busübergang von einem ersten Bus 10 zu einem zweiten Bus verwirklicht, wobei der erste Bus 10 in Form eines an sich bekannten für hohe Kommunikationsgeschwindigkeiten ausgelegten Peripheriebusses "Profibus DP" und der zweite Bus 11 in Form eines ebenfalls an sich bekannten FF-Busses ausgebildet ist, der den Anforderungen gemäß der Fieldbus Foundation Spezifikation genügt. An diesen zweiten Bus 11 sind die Feldgeräte 6, 7, 8, 9 (FF-Feldgeräte) angeschlossen. Die Slave-Einheiten 3, 4, 5 sind über den ersten Bus 10 mit einer Master-Baugruppe 12 des Automatisierungsgerätes 2 verbunden, das eine CPU-Baugruppe 13 und weitere über einen Rückwandbus gekoppelte Baugruppen aufweist, z. B. Baugruppen in Form von Regler- und/oder Ein-/Ausgabe-und/oder sonstigen Funktions-Baugruppen. Selbstverständlich kann die Automatisierungseinrichtung 1 je nach einer zu lösenden Steuerungs- bzw. Automatisierungsaufgabe mit weiteren Automatisierungsgeräten und/oder dezentralen Peripheriegeräten und/oder Feldgeräten versehen sein. In Abhängigkeit dieser Aufgabe projektiert und/oder konfiguriert ein Anwender mittels eines z. B. über eine Industrial Ethernet-Kommunikationsverbindung 14 an das Automatisierungsgerät 2 angeschlossenen Engineering-Systems 15 die Automatisierungseinrichtung 1. Dazu weist das Engineering-System 15 ein geeignetes Software-Werkzeug auf, welches dem Anwender eine Hardware-Bibliothek in einem Fenster einer Anzeigeeinheit des Engineering-Systems 15 anzeigt und welches ermöglicht, dass der Anwender mittels Drag&Drop Hardware-Komponenten aus dieser Bibliothek mit einem Bedienelement zunächst auswählt, in ein weiteres Fenster der Anzeigeeinheit kopiert und entsprechend der zu lösenden Steueraufgabe miteinander verbindet. Das Software-Werkzeug weist den ausgewählten Feldgeräten automatisch Adressen zu oder schlägt dem Anwender Adressen vor, die der Anwender akzeptieren oder ändern kann.

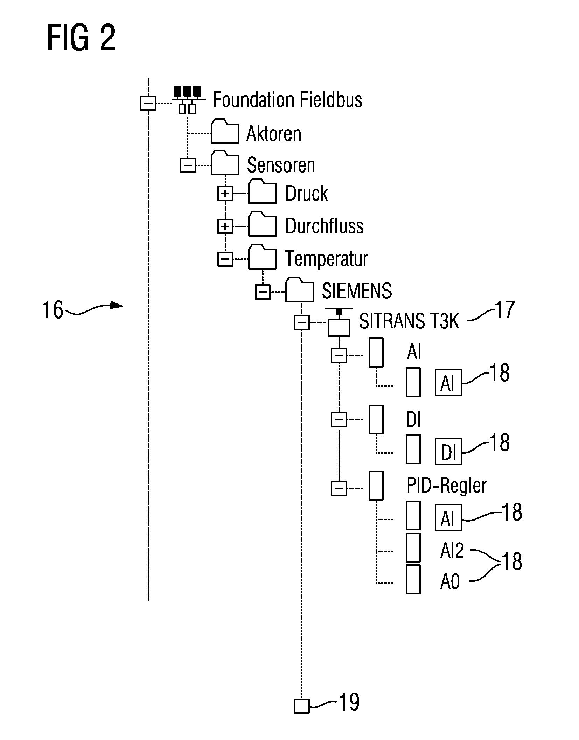

In diesem Zusammenhang wird auf Figur 2 verwiesen, in der eine mit mehreren Verzeichnissen bzw. Ordnern versehene Bibliothek bzw. ein Katalog 16 dargestellt ist. Es wird angenommen, dass der Anwender ein Feldgerät 17 mit dazugehörigen Funktionsblöcken 18 und ferner in einer hier nicht dargestellten Detailansicht Ein- und Ausgangsvariablen (IO-Daten) dieser Funktionsblöcke 18 auswählt. Darüber hinaus wird angenommen, dass der Anwender ein CiR-Feldgerät 19 auswählt, welches stellvertretend für eine Erweiterung der Automatisierungseinrichtung 1 mit einem weiteren Feldgerät vorgesehen ist.
Aus diesen ausgewählten Ein- und Ausgangsvariablen und aus Default-Werten für das CiR-Feldgerät 19 erzeugt das Software-Werkzeug den Teil eines Profibus DP-Telegramms, welches für einen zyklischen Informationsaustausch zwischen dem Automatisierungsgerät 2 und der Slave-Einheit 5 über den ersten Bus 10 vorgesehen ist und welches einen Prozessabbild-Datenbereich der projektierten Ein- und Ausgangsvariablen und einen projektierten reservierten Prozessabbild-Datenbereich umfasst, welcher zunächst mit den Default-Werten belegt ist. Selbstverständlich umfasst das DP-Telegramm auch Informationen, welche die weiteren Slave-Einheiten 3, 4 betreffen. Diese Slave-Einheiten sowie deren Auswirkungen auf das DP-Telegramm sind für die Erfindung ohne Bedeutung und werden daher der Einfachheit halber im Folgenden nicht betrachtet. Aus den ausgewählten Ein- und Ausgangsvariablen der Funktionsblöcke der Feldgeräte erzeugt das Software-Werkzeug ferner einen Systemdatenbaustein, in welchem die Adressen der Feldgeräte und die Konfiguration dieser Feldgeräte, d. h. die Anzahl dieser Variablen und die Aufteilung der ausgewählten Ein- und Ausgangsvariablen im Prozessabbild, hinterlegt sind. Diesen Systemdatenbaustein, welcher für den Steuerbetrieb der Automatisierungseinrichtung erforderlich ist, übermittelt das Software-Werkzeug des Engineering-Systems 15 dem Automatisierungsgerät 2, das diesen Systemdatenbaustein abspeichert und ferner in einer azyklischen Übertragung über den ersten Bus 10 der Slave-Einheit 5 (DP/FF-Link) zuführt, die ebenfalls den Systemdatenbaustein abspeichert. Dadurch, dass der Systemdatenbaustein sowohl im Automatisierungsgerät 2 als auch in der Slave-Einheit 5 hinterlegt ist, ist eine Zuordnung von I/O-Daten im Prozessabbild sowohl seitens des Automatisierungsgeräts 2 als auch seitens der Slave-Einheit 5 (FF-seitig) gegeben.

Im vorliegenden Beispiel sind im Systemdatenbaustein lediglich die Adresse und die Konfiguration des Feldgerätes 17 mit den Ein- und Ausgangsvariablen der dazugehörigen Funktionsblöcke 18 hinterlegt. Der Vollständigkeit halber wird wiederum darauf hingewiesen, dass der Systemdatenbaustein auch Daten für die Slave-Einheiten 3, 4 umfasst, die - wie angedeutet - im Folgenden nicht betrachtet werden.

Der Anwender verschaltet mittels des Software-Werkzeugs oder eines weiteren Software-Werkzeugs die ausgewählten Ein- und Ausgangsvariablen der Funktionsblöcke 18 sowie die Ein- und Ausgangsvariablen der Funktionsblöcke zwischen den Feldgeräten, wobei aufgrund dieser Verschaltungen und aufgrund der Anzahl der projektierten Feldgeräte mit dazugehörigen Funktionsblöcken und der Anzahl der projektierten CiR-Feldgeräte Kommunikationsdaten - im vorliegenden Beispiel des CiR-Gerätes 19 - erzeugt werden, welche zum Abspeichern der Slave-Einheit 5 (DP/FF-Link) hinterlegt werden. Diese Kommunikationsdaten repräsentieren Kommunikationsbeziehungen und umfassen im Wesentlichen den genannten Verschaltungen entsprechende so genannte "Virtuelle Kommunikationsbeziehungen" (VCR) sowie einen Scheduler, welcher der Slave-Einheit 5 einen Zeitplan für die zyklische Steuerung der FF-Kommunikation am zweiten Bus 11 im Rahmen eines Makrozyklusses vorgibt. Die Slave-Einheit 5 übernimmt mittels dieses Scheduler die Funktion eines an sich bekannten Link Active Scheduler (LAS) einer FF-Konfiguration, der den zeitlichen Ablauf der FF-Buskommunikation steuert.

Schließlich werden mittels des Software-Werkzeugs Parameter einer Standard- und/oder herstellerspezifischen Gerätebeschreibung in die Feldgeräte 6 bis 9 hinterlegt, wodurch die Projektierung und Konfigurierung der Automatisierungseinrichtung 2 im Hinblick auf die Slave-Einheit 5 und die FF-Feldgeräte 6 bis 9 abgeschlossen und die Automatisierungseinrichtung 2 dazu vorbereitet ist, nach einem Start-Aufruf im Rahmen des Steuerbetriebs die Automatisierungsaufgabe zu lösen.

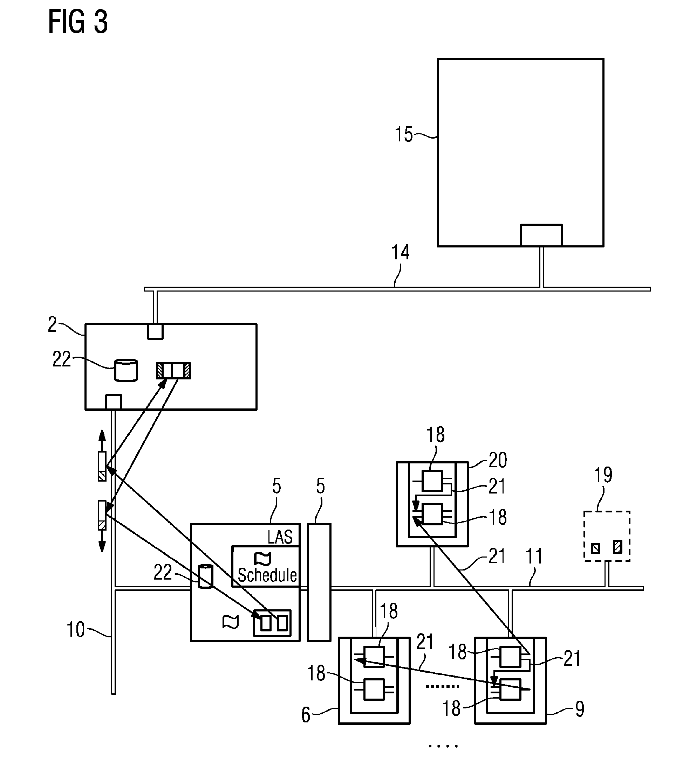

Es kann nun vorkommen, dass aufgrund einer vorzunehmenden Erweiterung der Automatisierungsaufgabe ein weiteres FF-Feldgerät an den zweiten Bus 11 während der Steuerung des technischen Prozesses angeschlossen wird.
In diesem Zusammenhang wird auf Figur 3 verwiesen, in der in einer vereinfachten Form eine Engineering- und Runtime-Übersicht gezeigt ist. Die in den Figuren 1 bis 3 dargestellten gleichen Teile sind mit gleichen Bezugszeichen versehen. Durch das gestrichelt eingezeichnete CiR-Feldgerät 19 wird angedeutet, dass der Anwender bereits im Rahmen der Projektierung und Konfigurierung auch ein CiR-Feldgerät mit Default-Werten für Eingangs- und Ausgangsvariablen projektiert hat. Wie beschrieben, ist dadurch die Automatisierungseinrichtung für eine Erweiterung mit einem FF-Feldgerät vorbereitet. Das über den ersten Bus 10 zyklisch übermittelte Profibus DP-Telegramm umfasst einen Prozessabbild-Datenbereich der projektierten Ein- und Ausgangsvariablen der Feldgeräte 6 bis 9 und den bereits projektierten reservierten Prozessabbild-Datenbereich mit Default-Werten, wobei in der Figur der reservierte Prozessabbild-Datenbereich der Ein- und Ausgangsvariablen schraffiert dargestellt ist. Für den Fall, dass während des Steuerbetriebs (Run-Betriebs) ein weiteres Feldgerät 20 an den zweiten Bus 11 angeschlossen wird, um die Automatisierungseinrichtung zu erweitern, wählt der Anwender - wie beschrieben - mittels des Software-Werkzeugs im Rahmen einer Nachprojektierung zusätzlich aus der Bibliothek 16 das Feldgerät mit dazugehörigen Funktionsblöcken aus, wobei das Software-Werkzeug für dieses Feldgerät eine Adresse erzeugt und dem Feldgerät die höchste Adresse innerhalb des FF-Strangs (zweiter Bus 11) zugewiesen wird. Das Software-Werkzeug erzeugt einen neuen Systemdatenbaustein 22, in welchem die Adressen der Feldgeräte 6 bis 9, 20 und die neue FF-Konfiguration hinterlegt sind, wobei die neue FF-Konfiguration die Anzahl der Ein- und Ausgangsvariablen aller Feldgeräte 6 bis 9, 20 und die Aufteilung dieser Variablen umfasst.
Ferner verschaltet der Anwender mittels des Software-Werkzeugs oder des weiteren Software-Werkzeugs wiederum die Ein-und Ausgangsvariablen der Funktionsblöcke 18 des Feldgerätes 20 und die Ein- und Ausgangsvariablen der Funktionsblöcke 18 zwischen den Feldgeräten 6 bis 9, 20, was in der Figur mit einem Bezugszeichen 21 angedeutet ist, wobei in der beschriebenen Art und Weise Kommunikationsdaten erzeugt werden, welche sich von den ursprünglichen, bereits in der Slave-Einheit 5 hinterlegten Kommunikationsdaten im Hinblick auf den Scheduler und die "Virtuellen Kommunikationsbeziehungen" (VCR) unterscheiden. Im Hinblick auf Aufrufe bleibt der Makrozyklus des zweiten Busses 11 (FF-Bus) für die bestehenden FF-Geräte unverändert, für Aufrufe des neuen FF-Gerätes wird der Makrozyklus erweitert. Lediglich die Zeitdauer des Makrozyklus des zweiten Busses 11 (FF-Bus) bleibt unverändert. Diese neuen Kommunikationsdaten werden von dem Engineering-System 15 über das Automatisierungsgerät 2 in die Slave-Einheit 5 geladen, nachdem mittels des Software-Werkzeugs die Parameter einer Standard- und/oder herstellerspezifischen Gerätebeschreibung in das Feldgerät 20 hinterlegt sind. Anschließend wird der neue Systemdatenbaustein 22, welcher mit einem neuen Zeitstempel versehen ist, vom Engineering-System 14 in das Automatisierungsgerät 2 und von diesem Gerät 2 in die Slave-Einheit 5 geladen. Die Hinterlegung der Parameter der Gerätebeschreibungen in die Feldgeräte 6 bis 9, 20 sowie das Laden der Kommunikationsdaten in die Slave-Einheit 5 und des Systemdatenbausteins 22 in das Automatisierungsgerät 2 und in die Slave-Einheit 5 bewirken, dass der neue Scheduler sowie die neuen "Virtuellen Kommunikationsbeziehungen" (VCR) FF-seitig aktiviert werden und zwischen dem Automatisierungsgerät 2 und der Slave-Einheit 5 mit den an diese angeschlossenen Feldgeräten 6 bis 9, 20 im Rahmen der zyklischen Steuerung Daten des Prozessabbildes ausgetauscht werden.

Um sicherzustellen, dass dem Systemdatenbaustein die "richtigen" Kommunikationsdaten bzw. Kommunikationsbeziehungen zugeordnet werden, erzeugt das Engineering-System für den Systemdatenbaustein und die diesem zugehörigen Kommunikationsdaten eine eindeutige Kennung (UUID), die das Engineering-System 15 in den Systemdatenbaustein und in die Kommunikationsdaten hinterlegt. Die Slave-Einheit liest jeweils die Kennung aus und für den Fall, dass die Slave-Einheit erkennt, dass der Systemdatenbaustein nicht den Kommunikationsdaten bzw. die Kommunikationsdaten nicht dem Systemdatenbaustein zugeordnet sind, ignoriert die Slave-Einheit die von dem Automatisierungsgerät der Slave-Einheit während des Steuerbetriebs über den ersten Bus 10 übermittelten Daten, welche das neu angeschlossene Feldgerät betreffen.

## Patentansprüche

1. Verfahren zum Betreiben einer Automatisierungseinrichtung (1), welche mindestens eine Master-Einheit (2) und mindestens eine über einen ersten Bus (10) verbundene Slave-Einheit (5) umfasst, wobei während der Steuerung eines technischen Prozesses über den ersten Bus (10) Telegramme übermittelt werden, welche jeweils einen Prozessabbild-Datenbereich für projektierte, an die Slave-Einheit (5) über einen zweiten Bus (11) angeschlossene Feldgeräte (6 bis 9) und einen projektierten reservierten Prozessabbild-Datenbereich umfassen, welcher für eventuelle Erweiterungen der Automatisierungseinrichtung (1) mit mindestens einem weiteren an diese Slave-Einheit (5) anschließbaren Feldgerät (20) vorgesehen ist, **dadurch gekennzeichnet, dass** nach dem Anschließen des mindestens einen weiteren Feldgerätes
- Parameter der Feldgeräte (6 bis 9) und des weiteren Feldgerätes (20) sowie Kommunikationsbeziehungen - Scheduler, VCR - der Feldgeräte (6 bis 9) und des weiteren Feldgerätes (20) über den ersten Bus (10) in die Slave-Einheit (5) hinterlegt werden,
- der Master-Einheit (2) von einem Engineering-System (15) ein Systemdatenbaustein (22) für die Slave-Einheit (5) übermittelt wird, der sowohl in die Master- als auch in die Slave-Einheit hinterlegt wird und der Adressen der Feldgeräte (6 bis 9) und des weiteren Feldgerätes (20) und Konfigurationsdaten umfasst, welche die Anzahl von Ein-und Ausgangsvariablen der Feldgeräte und des weiteren Feldgerätes und die Aufteilung dieser Variablen im Prozessabbild-Datenbereich aufweisen.

2. Verfahren nach Anspruch 1, **dadurch gekennzeichnet, dass** mittels der Kommunikationsbeziehungen die Verschaltung der Eingangs- und/oder Ausgangsparameter von Funktions-Bausteinen der Feldgeräte angezeigt wird.

3. Verfahren nach Anspruch 1 oder 2, **dadurch gekennzeichnet, dass** für eine Zuordnung des Systemdatenbausteins (22) zu den Kommunikationsbeziehungen dem Systemdatenbaustein (22) und den Kommunikationsbeziehungen eine Kennung (UUID) zugewiesen wird.

4. Verfahren nach einem der Ansprüche 1 bis 3, **dadurch gekennzeichnet, dass** das weitere Feldgerät (20) mit aufsteigenden Adressen versehen wird.

5. Automatisierungseinrichtung, welche mindestens eine Master-Einheit (2) und mindestens eine über einen ersten Bus (10) verbundene Slave-Einheit (5) umfasst, wobei die Master-und die Slave-Einheit während der Steuerung eines technischen Prozesses über den ersten Bus (10) Telegramme austauschen, welche jeweils einen Prozessabbild-Datenbereich für projektierte, an die Slave-Einheit (5) über einen zweiten Bus (11) angeschlossene Feldgeräte (6 bis 9) und einen projektierten reservierten Prozessabbild-Datenbereich umfassen, welcher für eventuelle Erweiterungen der Automatisierungseinrichtung mit mindestens einem weiteren an diese Slave-Einheit anschließbaren Feldgerät (20) vorgesehen ist, **dadurch gekennzeichnet, dass** die Automatisierungseinrichtung (1) dazu ausgebildet ist, nach dem Anschließen des weiteren Feldgeräts (20)
- Parameter der Feldgeräte (6 bis 9) und des weiteren Feldgerätes (20) sowie Kommunikationsbeziehungen - Scheduler, VCR - der Feldgeräte (6 bis 9) und des weiteren Feldgerätes (20) über den ersten Bus (10) in die Slave-Einheit (5) zu hinterlegen,
- der Master-Einheit (2) von einem Engineering-System (15) einen Systemdatenbaustein (22) zu übermitteln und sowohl in die Master- als auch in die Slave-Einheit zu hinterlegen, wobei der Systemdatenbaustein (22) Adressen der Feldgeräte (6 bis 9) und des weiteren Feldgerätes (20) und Konfigurationsdaten umfasst, welche die Anzahl von Ein-und Ausgangsvariablen der Feldgeräte (6 bis 9) und des weiteren Feldgerätes (20) und die Aufteilung dieser Variablen im Prozessabbild-Datenbereich aufweisen.

6. Automatisierungseinrichtung nach Anspruch 5, **dadurch gekennzeichnet, dass** die Konfigurationsdaten die Verschaltung der Eingangs- und/oder Ausgangsparameter von Funktions-Bausteinen der Feldgeräte anzeigen.

7. Automatisierungseinrichtung nach Anspruch 5 oder 6, **dadurch gekennzeichnet, dass** die Slave-Einheit (5) dazu ausgebildet ist, eine dem Systemdatenbaustein und den Kommunikationsbeziehungen zugewiesene Kennung (UUID) zu vergleichen.

8. Automatisierungseinrichtung nach einem der Ansprüche 5 bis 7, **dadurch gekennzeichnet, dass** die weiteren Feldgeräte mit aufsteigenden Adressen versehen sind.
